# FASCICULE DE BREVET EUROPEEN

(11) **EP 1 313 059 B1**
(45) Date de publication et mention de la délivrance du brevet: **09.02.2005**
(21) Numéro de dépôt: 02292765.1
(22) Date de dépôt: 06.11.2002
(51) Int. Cl.: G06K 9/00, G06F 3/033

(54) **Element de détection tactile, procédé mettant en oeuvre un tel element de détection tactile, et appareil incorporant cet element**
Bestandteil zur Berührungsdetektion, Verfahren unter Verwendung eines solchen Bestandteiles zur Berührungsdetektion und Gerät, wobei ein solcher Bestandteil eingebaut ist
Touch detection element, method using such a touch detection element and device incorporating such an element

(30) Priorité: 13.11.2001 FR 0114655
(43) Date de publication de la demande: 21.05.2003
(73) Titulaire: STMicroelectronics S.A., 92120 Montrouge (FR)
(72) Inventeur: Le-Pailleur, Laurent, 38340 Voreppe (FR)
(74) Mandataire: Verdure, Stéphane

(56) Documents cités:
- EP-A- 0 932 117
- WO-A-01/82237
- WO-A-98/58342
- US-A- 6 088 585

## Description

La présente invention concerne les systèmes de détection tactile qui détectent un contact tactile par le biais d'une onde transmise entre au moins une électrode et des détecteurs. Elle concerne plus particulièrement de tels systèmes qui ont plusieurs modes de fonctionnement, ainsi que les appareils électroniques qui incorporent de tels systèmes.

Des systèmes de détection tactile ont déjà été proposés pour des terminaux de télécommunication portables (voir par exemple US 6 088 585). Ils peuvent assurer une fonction d'identification ou d'authentification de l'utilisateur du terminal par reconnaissance de son empreinte digitale.

La demande internationale de brevet publiée sous le numéro WO 9 858 342 décrit un arrangement de détecteurs selon une ligne permettant, lors du passage du doigt d'un utilisateur sur cette ligne selon une direction sensiblement perpendiculaire à celle-ci, de détecter certaines caractéristiques de son empreinte digitale, à la façon d'un scanner, et ainsi d'authentifier l'utilisateur.

Par ailleurs, des systèmes de détection tactile sont couramment utilisés pour réaliser une fonction de pointage ou une fonction de navigation dans des menus affichés sur un écran. Il s'agit alors de repérer les déplacements d'un doigt sur une surface de détection, ainsi que détecter éventuellement un signal de sélection opéré par le doigt, tel qu'un contact rapide répété avec cette surface.

Il existe plusieurs types de systèmes de détection tactile qui utilisent des principes de détection différents. La présente invention concerne les systèmes de détection tactile dans lesquels un doigt d'un opérateur en contact avec une surface de détection est détecté par la transmission au travers de ce doigt d'une onde émise par au moins une électrode vers au moins un détecteur. L'onde est émise de façon continue ou quasi-continue par la ou les électrodes émettrices, mais n'est détectée par les détecteurs que lors d'un contact du doigt (désigné aussi par contact digital) avec la surface, ce contact se produisant simultanément au niveau de l'une des électrodes émettrices et au niveau de certains au moins des détecteurs.

Le dessin de l'empreinte digitale est repéré par la différence de transmission de l'onde depuis le doigt vers certains des détecteurs, selon que ces détecteurs se trouvent à l'aplomb d'une vallée ou d'un point en relief de la surface du doigt.

Au sens de la présente invention, le contact de la surface de détection par un doigt s'entend aussi du contact de cette surface de détection par un élément extérieur quelconque, par exemple un stylet de pointage, qui présente des caractéristiques appropriées pour l'application des principes précédents de détection tactile et de repérage de cet élément extérieur.

De même, au sens de la présente invention, le contact tactile entre la surface de détection et l'élément extérieur s'entend aussi d'un effleurement, ou bien d'un rapprochement sans contact entre l'élément extérieur et la surface de détection, dans la mesure où le fonctionnement du dispositif de détection peut encore être assuré.

Un but de la présente invention est de proposer un dispositif de détection tactile par transmission, lors d'un contact avec la surface, d'une onde entre au moins une électrode génératrice de cette onde et au moins un détecteur, qui possède au moins deux modes de fonctionnement distincts, et qui présente une consommation électrique réduite.

La présente invention a pour objet un élément de détection tactile comportant une surface de détection, une partie conductrice, un premier et un second ensembles de détecteurs disposés au niveau de la surface de détection, un premier et un second ensembles d'électrodes. Chaque ensemble d'électrodes comprend au moins une électrode s'étendant parallèlement à la surface de détection, toutes les électrodes étant par elles-mêmes isolées électriquement deux à deux. Chaque détecteur respectivement du premier ou du second ensemble de détecteurs est agencé de façon à détecter un signal émis par au moins une électrode respectivement du premier ou du second ensemble d'électrodes, et transmis depuis l'une des électrodes émettrices à travers un élément extérieur venant en contact avec la surface de détection au niveau de ce détecteur et au niveau de cette électrode. Les premier et second ensembles d'électrodes forment chacun une capacité respective avec ladite partie conductrice de l'élément de détection tactile. Selon l'invention, la capacité entre le second ensemble d'électrodes et ladite partie conductrice est inférieure à la capacité entre le premier ensemble d'électrodes et ladite partie conductrice.

Un avantage de la présente invention est de permettre, avec un même élément de détection tactile, deux modes de détection mettant en oeuvre de façon différente les deux ensembles de détecteurs et les deux ensembles d'électrodes. Les deux modes de détection peuvent alors présenter des caractéristiques de consommation électrique distinctes. Ceci est particulièrement adapté pour des dispositifs de détection tactile intégrés à des appareils fonctionnant sur batterie, tels que des terminaux de radiocommunication portables. En effet, pour de tels appareils, la consommation électrique est réduite autant que possible pour augmenter l'autonomie de l'appareil. L'un des modes de détection tactile est alors optimisé pour présenter une consommation électrique particulièrement basse.

Les détecteurs sont par eux-mêmes isolés électriquement de chaque électrode et isolés entre eux. Les détecteurs et les électrodes sont disposés au niveau de la surface de détection de telle façon que chaque détecteur soit suffisamment proche de certaines des électrodes, pour qu'un couplage puisse être établi entre chaque détecteur et certaines des électrodes, lors du contact d'un doigt ou de tout autre élément extérieur avec la surface de détection au niveau de ce détecteur et de ces électrodes. Ainsi, lors de ce contact, une onde est transmise depuis l'électrode au détecteur, au travers du doigt ou de l'élément extérieur. La distance entre le détecteur et l'électrode peut être augmentée si la puissance de l'onde est augmentée corrélativement, de façon à conserver un couplage efficace entre le détecteur et l'électrode émettrice en présence du doigt ou de l'élément extérieur.

Dans la réalisation préférée de l'élément de détection tactile selon l'invention, la portion de la surface de détection occupée par le second ensemble d'électrodes est plus petite que la portion de la surface de détection occupée par le premier ensemble d'électrodes. Par ailleurs, certains détecteurs peuvent appartenir à la fois aux premier et au second ensembles de détecteurs.

L'élément de détection tactile comprend en outre un contrôleur d'électrodes disposé pour établir des liaisons électriques entre certaines des électrodes et pour activer les détecteurs en fonction des ensembles de détecteurs. Deux ou plusieurs électrodes ainsi reliées électriquement émettent simultanément un même signal électrique destiné à être transmis vers au moins un détecteur à travers l'élément extérieur venant en contact avec l'une quelconque de ces électrodes d'une part, et avec ce détecteur d'autre part.

Dans un premier mode de détection tactile, le contrôleur d'électrodes est commandé de telle façon qu'un signal est transmis depuis au moins une électrode, à travers un élément extérieur venant en contact avec la surface de détection, à au moins un détecteur du premier ensemble de détecteurs. Le contrôleur d'électrodes peut être en outre commandé pour, dans ce premier mode de détection, établir une première liaison électrique reliant une électrode du premier ensemble d'électrodes à au moins une autre électrode de l'élément de détection tactile.

Dans un second mode de détection tactile, le contrôleur d'électrodes est commandé de telle façon qu'un signal est transmis depuis au moins une électrode du second groupe d'électrodes, à travers un élément extérieur venant en contact avec la surface de détection, à au moins un détecteur du second ensemble de détecteurs. Si le second ensemble d'électrodes comprend au moins deux électrodes, le contrôleur d'électrodes peut être en outre commandé pour, dans ce second mode de détection, établir une seconde liaison électrique reliant entre elles lesdites électrodes du second ensemble d'électrodes.

Le premier mode de détection tactile correspond par exemple à une fonction d'identification ou d'authentification de l'utilisateur d'un appareil comprenant l'élément de détection tactile, d'après certaines caractéristiques de son empreinte digitale. Le second mode de détection tactile correspond par exemple à une fonction de pointage, ou encore à une fonction de navigation.

La fonction d'identification de l'utilisateur peut nécessiter l'activation d'un grand nombre de détecteurs, et par conséquent engendrer une consommation électrique relativement importante. A l'inverse, les fonctions de pointage et de navigation peuvent être obtenues chacune avec un nombre restreint de détecteurs disposés de façon adéquate au niveau de la surface de détection, réduisant en conséquence la consommation électrique liée à cette fonction. Cette distinction entre les modes de détection en fonction de leur consommation électrique respective est d'autant plus importante que les fonctions de pointage et de navigation sont en général activées pendant une durée très supérieure à celle de la fonction d'identification de l'utilisateur.

Eventuellement, un élément de détection tactile selon l'invention peut présenter un premier mode de détection tactile tel que décrit précédemment, et deux autres modes, dits deux seconds modes de détection tactile différents, chacun de ces deux autres modes de détection ayant les caractéristiques du dit second mode de détection tactile décrit précédemment.

Par exemple, le premier mode de détection tactile correspond à la fonction d'identification ou d'authentification de l'utilisateur, et les deux dits seconds modes de détection tactile correspondent respectivement à la fonction de pointage et à la fonction de navigation.

Les fonctions de pointage et de navigation se distinguent notamment par le nombre et la position des détecteurs activés pour chacune d'entre elles. La fonction de pointage nécessite un repérage de la position et du déplacement de l'élément extérieur sur la surface de détection sensiblement plus complet et plus précis que la fonction de navigation. En effet, la fonction de navigation peut être limitée au repérage de quatre positions de contact avec la surface de détection, correspondant par exemple aux quatre directions haut, bas, droite et gauche, ainsi qu'éventuellement une opération de sélection par contact tactile.

La disposition des électrodes émettrices peut aussi différer entre ces deux fonctions. De ce fait, la consommation électrique du mode de détection tactile associé à la fonction de navigation peut être inférieure à celle du mode de détection associé à la fonction de pointage. II est alors avantageux de prévoir deux modes de détection tactile différents associés aux deux fonctions de pointage et de navigation.

L'association précédente des dits premier et second(s) mode(s) de détection tactile avec les fonctions respectives d'identification de l'utilisateur, de pointage ou/et de navigation n'est donnée qu'à titre d'exemple. Une autre application de l'invention peut consister à associer ledit premier mode de détection tactile à la fonction de pointage et un dit second mode de détection tactile à la fonction de navigation.

L'élément de détection tactile selon la présente invention peut aussi comporter un troisième mode de détection tactile, pouvant être par exemple un mode de veille dans lequel des fonctionnalités de l'appareil électronique incorporant l'élément de détection tactile sont non opérationnelles, et à partir duquel elles sont rendues opérationnelles. Dans ce troisième mode, le contrôleur d'électrodes est commandé pour détecter un contact d'un élément extérieur avec la surface de détection au niveau de deux électrodes par la modification, lors de ce contact, d'une impédance entre ces deux électrodes. Pour un élément de détection tactile comprenant au moins trois électrodes, le contrôleur d'électrodes peut être commandé pour établir au moins une liaison électrique entre deux électrodes. Ainsi, une répartition adéquate de l'ensemble des électrodes en deux groupes d'électrodes isolés électriquement l'un de l'autre et couvrant de façon appropriée la surface de détection permet d'améliorer la détection du contact d'un élément extérieur avec une partie quelconque de la surface de détection.

L'invention concerne aussi un procédé selon la revendication 9. Le premier mode de détection tactile peut comprendre en outre l'établissement d'une première liaison électrique reliant une électrode du premier ensemble d'électrodes à au moins une autre électrode de l'élément de détection tactile.

Par ailleurs, pour les éléments de détection tactile dont le second ensemble d'électrodes comprend au moins deux électrodes, le second mode de détection tactile peut comprendre en outre l'établissement d'une seconde liaison électrique reliant entre elles les électrodes de ce second ensemble d'électrodes.

Le procédé de détection tactile selon l'invention peut comprendre encore un troisième mode de détection tactile dans lequel un contact d'un élément extérieur avec la surface de détection au niveau de deux électrodes est détecté par la modification d'une impédance entre ces deux électrodes. Si l'élément de détection tactile comporte au moins trois électrodes, ce troisième mode de détection tactile peut comprendre l'établissement d'au moins une liaison électrique entre deux électrodes.

L'invention concerne enfin un appareil électronique incorporant un élément de détection tactile tel que décrit précédemment.

D'autres particularités et avantages de la présente invention apparaîtront dans la description ci-après d'exemples de réalisation non limitatifs, en référence aux dessins annexés, dans lesquels :
- la figure 1 est une vue en coupe d'un élément de détection tactile auquel s'applique la présente invention ;
- la figure 2 représente un exemple de répartition des détecteurs au niveau de la surface de détection de l'élément de détection tactile précédent,
- les figures 3 et 4 représentent deux exemples de la disposition des électrodes au niveau de la surface de détection, pour la répartition des détecteurs conforme à la figure 2.

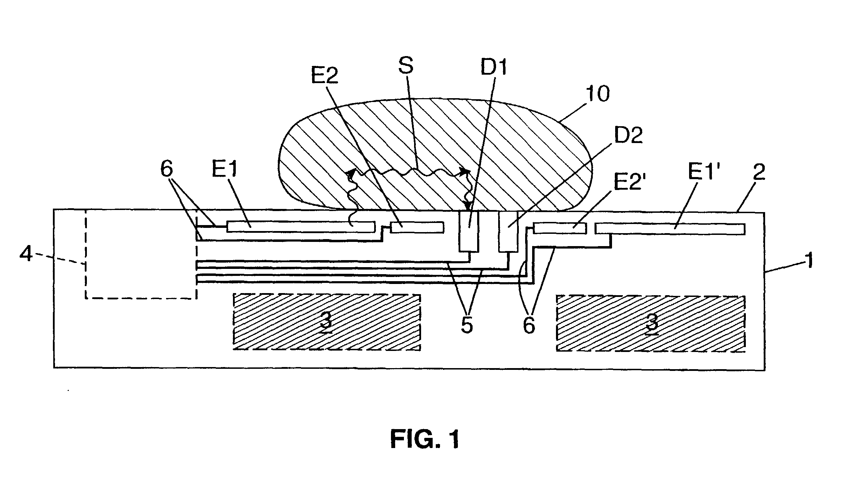

Selon la figure 1, l'élément de détection tactile 1 comprend la surface de détection 2 avec laquelle peut entrer en contact tactile un élément extérieur 10. Cet élément extérieur 10 peut être le doigt d'un utilisateur d'un appareil comprenant l'élément de détection tactile 1. L'élément de détection tactile 1 comprend par ailleurs les parties conductrices 3, qui sont par exemple des parties métalliques ou de polysilicium à comportement métallique. Ces parties 3 peuvent être portées à un potentiel de référence.

Des détecteurs D1, D2 sont disposés au niveau de la surface de détection 2.

Des électrodes E1, E1', E2, E2' sont disposées parallèlement à la surface de détection, et peuvent être notamment recouvertes d'une couche dure de protection contre l'usure occasionnée par des contacts tactiles répétés. Ces électrodes sont réparties entre un premier ensemble d'électrodes regroupant les électrodes E1 et E1', et un second ensemble d'électrodes regroupant les électrodes E2 et E2'. Les électrodes E1, E1' du premier ensemble d'électrodes, du fait de leur surface importante, présentent une capacité importante avec les parties conductrices 3, par exemple de l'ordre de 10 nanofarads. Les électrodes E2, E2' du second ensemble d'électrodes ont une surface beaucoup plus réduite, et par conséquent présentent une capacité avec les parties conductrices 3 beaucoup plus faible, par exemple de l'ordre de 0,1 nanofarad.

Pour détecter un contact entre le doigt 10 de l'utilisateur et la surface de détection 2, certaines des électrodes émettent un signal S qui est transmis par le doigt 10 à certains au moins des détecteurs D1 et D2 lors du contact du doigt avec la surface de détection. Ce signal S peut être une onde de fréquence élevée, par exemple de l'ordre du mégahertz.

La consommation électrique de l'élément de détection tactile 1 en fonctionnement est alors en grande partie due à l'interaction électrique entre les électrodes émettrices de l'onde et les parties conductrices 3 de l'élément de détection tactile 1. Cette consommation électrique dépend de la capacité entre les électrodes activées pour émettre l'onde et ces parties conductrices 3.

Un contrôleur d'électrodes 4 est relié aux détecteurs D1, D2 par des connexions métalliques respectives 5, et aux différentes électrodes E1, E1', E2, E2' par des connexions métalliques respectives 6.

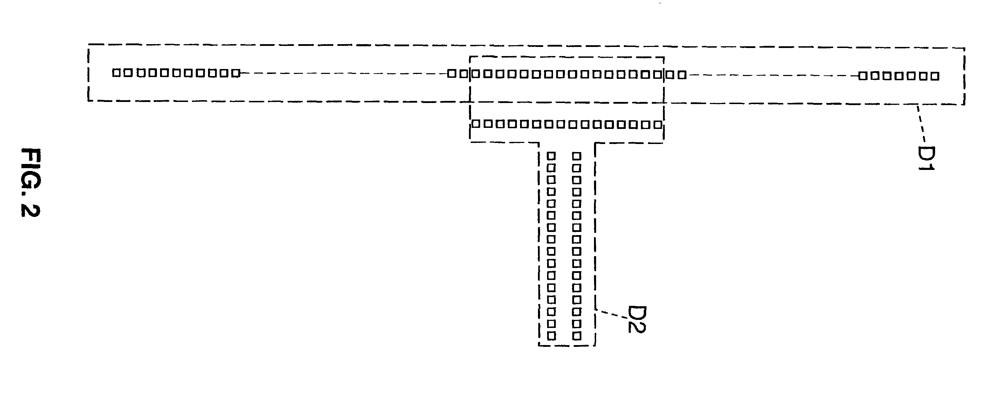

La figure 2 illustre une disposition particulière des détecteurs au niveau de la surface de détection 2. Les détecteurs sont répartis en deux ensembles de détecteurs D1, D2. Les détecteurs du premier ensemble D1 sont disposés selon une ligne qui comprend par exemple 256 détecteurs individuels. La longueur de cette ligne, par exemple d'environ 15 millimètres, correspond approximativement à la largeur d'un doigt. Ces détecteurs du premier ensemble de détecteurs D1 sont plus particulièrement affectés à la fonction d'identification ou d'authentification de l'empreinte digitale de l'utilisateur. Dans le mode de détection correspondant à cette fonction, l'utilisateur passe son doigt sur la ligne de détecteurs D1, dans une direction sensiblement perpendiculaire à cette ligne, de façon à permettre une détection par les détecteurs D1 de certaines caractéristiques de son empreinte digitale.

Comme le représente la figure 2, les détecteurs du second ensemble de détecteurs D2 sont répartis selon 4 segments rectilignes. Les deux premiers segments sont parallèles entre eux et comprennent par exemple respectivement seize détecteurs individuels. Ces segments ont par exemple pour longueurs respectives 1 millimètre et sont parallèles aux détecteurs du premier ensemble de détecteurs D1. Les détecteurs de l'un de ces segments peuvent être communs avec le premier ensemble de détecteurs D1. Deux autres segments de détecteurs du second ensemble de détecteurs D2, parallèles entre eux, comprennent par exemple aussi respectivement seize détecteurs individuels. Ces deux derniers segments de détecteurs sont perpendiculaires aux deux premiers segments de détecteurs D2 afin de permettre un repérage des déplacements du doigt de l'utilisateur sur la surface de détection 2 selon deux directions orthogonales entre elles. Dans la suite, les références D1 et D2 désignent les détecteurs appartenant aux groupes correspondants introduits ci-dessus.

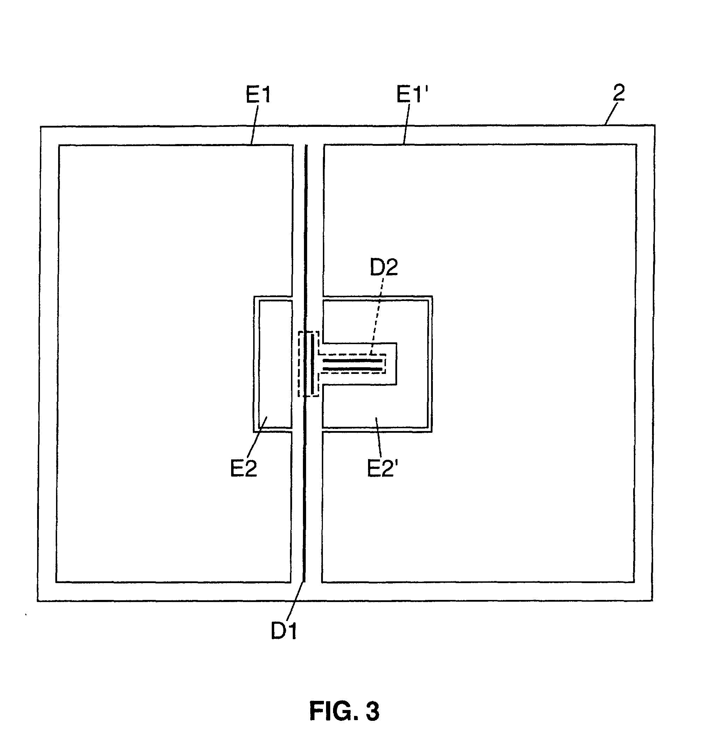

La figure 3 représente le mode de réalisation préféré de la présente invention. La surface de détection 2 comporte les deux ensembles de détecteurs D1 et D2 répartis tel que décrit précédemment. Le premier ensemble d'électrodes comprend les deux électrodes E1 et E1'. Dans la configuration représentée, les deux électrodes E1, E1' sont localisés de part et d'autre de la ligne de détecteurs D1 du premier ensemble de détecteurs. Les deux électrodes E2 et E2' entourent approximativement les détecteurs D2 du second groupe de détecteurs. Elles sont disposées de telle façon que chaque détecteur D2 du second groupe de détecteurs se trouve à proximité d'au moins l'une des électrodes E2, E2'.

Dans le mode de détection correspondant à l'identification ou l'authentification de l'empreinte digitale de l'utilisateur, les électrodes E1 et E1' sont connectées entre elles par le contrôleur d'électrodes 4. Elles émettent alors simultanément l'onde de haute fréquence S destinée à être transmise par le doigt 10 de l'utilisateur à certains des détecteurs D1 du premier ensemble de détecteurs, lors du contact de ce doigt simultanément avec l'une au moins des deux électrodes E1, E1' et certains des détecteurs D1 du premier ensemble de détecteurs. Les deux électrodes E2 et E2' peuvent aussi, dans ce mode de fonctionnement, être reliées électriquement aux deux électrodes E1 et E'1 par le contrôleur d'électrodes 4, de façon à réaliser une meilleure transmission de l'onde S au doigt 10, et ainsi permettre une meilleure détection de cette onde par les détecteurs D1 du premier ensemble de détecteurs. Cette connexion par le contrôleur 4 de plusieurs électrodes entre elles permet d'améliorer la sensibilité de la détection des empreintes digitales.

Dans le mode de fonctionnement correspondant à la fonction de pointage, seules les deux électrodes E2 et E2' émettent l'onde S. Les deux électrodes E2 et E2' sont connectées entre elles par le contrôleur d'électrodes 4, et isolées électriquement des deux autres électrodes E1 et E1'. Les détecteurs D2 des 4 segments de détecteurs perçoivent alors l'onde S lors du contact du doigt 10 de l'utilisateur avec la surface de détection 2 au niveau de ces détecteurs et au niveau d'au moins l'une des deux électrodes E2 et E2'.

Du fait de la surface réduite des électrodes E2 et E2' mises en jeu dans le mode de fonctionnement correspondant à la fonction de pointage, la consommation électrique de ce mode de fonctionnement est inférieure à celle du mode de fonctionnement correspondant à la fonction d'identification.

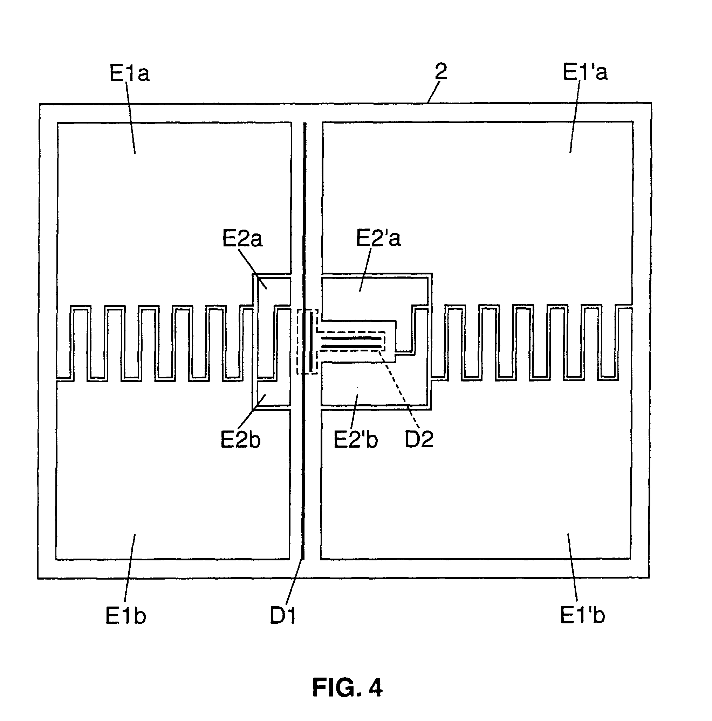

La figure 4 représente une disposition d'électrodes au niveau de la surface de détection 2 de l'élément de détection tactile 1 alternative à celle représentée sur la figure 3. Elle correspond à la même répartition des détecteurs D1 et D2. Dans cette disposition, chaque électrode E1, E1', E2, E2' de la figure 3 est divisée respectivement en deux électrodes indexées a et b. Dans chacun des deux modes de fonctionnement correspondant aux fonctions d'identification, ou d'authentification, et de pointage, les deux électrodes indexées a et b correspondant à une même électrode de la figure 3 sont reliées électriquement entre elles par le contrôleur d'électrodes 4. Ces deux modes de fonctionnement sont alors identiques à ceux précédemment décrits.

Dans un troisième mode de fonctionnement correspondant à un mode de veille de l'appareil électronique incorporant l'élément de détection tactile 1, les électrodes E1a, E1'a, E2a et E2'a sont reliées entre elles par le connecteur d'électrodes 4. Par ailleurs, le contrôleur d'électrodes 4 relie entre elles les électrodes E1b, E1'b, E2b et E2'b, en les maintenant isolées électriquement des électrodes du groupe précédent. En mode de veille, le contact du doigt 10 de l'utilisateur avec la surface de détection 2 est détecté par la variation d'une impédance entre ces deux groupes d'électrodes.

Selon la réalisation de la surface de détection 2, l'impédance détectée peut être de nature résistive ou capacitive, ou encore intermédiaire avec une composante résistive et une composante capacitive.

Cette variation d'impédance est d'autant plus importante que les électrodes de chaque groupe sont rapprochées de celles de l'autre groupe, voire présentent avec elles des contours imbriqués. En effet, lors du contact du doigt 10 avec au moins une électrode de chaque groupe, la contribution de l'impédance du doigt 10 à l'impédance entre ces deux groupes d'électrodes est ainsi très faible. L'impédance entre les deux groupes d'électrodes lors du contact du doigt 10 est alors très distincte de l'impédance entre ces deux groupes d'électrodes en l'absence du doigt 10.

De plus, une configuration des électrodes de chaque groupe très imbriquée avec les électrodes de l'autre groupe permet d'améliorer l'efficacité de détection du contact du doigt 10, quelque soit l'endroit de la surface de détection 2 touché par le doigt.

## Revendications

1. Elément de détection tactile (1) comportant une surface de détection (2), une partie conductrice (3), un premier (D1) et un second (D2) ensembles de détecteurs disposés au niveau de la surface de détection (2), un premier (E1, E1') et un second (E2, E2') ensembles d'électrodes, chaque ensemble d'électrodes comprenant au moins une électrode s'étendant parallèlement à la surface de détection (2), toutes les électrodes étant par elles-mêmes isolées électriquement deux à deux, les premier et second ensembles d'électrodes formant chacun une capacité respective avec ladite partie conductrice (3) de l'élément de détection tactile (1), chaque détecteur du premier ensemble de détecteurs (D1) étant agencé de façon à détecter un signal (S) émis par au moins une électrode du premier ensemble d'électrodes (E1) et transmis depuis l'une des électrodes émettrices à travers un élément extérieur (10) venant en contact avec la surface de détection (2) au niveau de ce détecteur et au niveau de cette électrode, chaque détecteur du second ensemble de détecteurs (D2) étant agencé de façon à détecter un signal (S) émis par au moins une électrode du second ensemble d'électrodes (E2) et transmis depuis l'une des électrodes émettrices à travers un élément extérieur (10) venant en contact avec la surface de détection (2) au niveau de ce détecteur et au niveau de cette électrode, dans lequel la capacité entre le second ensemble d'électrodes (E2) et ladite partie conductrice (3) est inférieure à la capacité entre le premier ensemble d'électrodes (E1) et ladite partie conductrice (3).

2. Elément de détection tactile selon la revendication 1, **caractérisé en ce que** la portion de la surface de détection (2) occupée par le second ensemble d'électrodes (E2) est plus petite que la portion de la surface de détection (2) occupée par le premier ensemble d'électrodes (E1).

3. Elément de détection tactile selon la revendication 1 ou la revendication 2, comprenant un ou plusieurs détecteurs qui appartiennent à la fois aux premier (D1) et au second (D2) ensembles de détecteurs.

4. Elément de détection tactile selon l'une quelconque des revendications précédentes, comprenant un contrôleur d'électrodes (4) commandé de telle façon que, dans un premier mode de détection tactile, un signal (S) est transmis depuis au moins une électrode à travers un élément extérieur (10) venant en contact avec la surface de détection (2) à au moins un détecteur du premier ensemble de détecteurs (D1), et commandé de telle façon que, dans au moins un second mode de détection tactile, un signal (S) est transmis depuis au moins une électrode du second groupe d'électrodes (E2) à travers un élément extérieur (10) venant en contact avec la surface de détection (2) à au moins un détecteur du second ensemble de détecteurs (D2).

5. Elément de détection tactile selon la revendication 4, dans lequel le contrôleur d'électrodes (4) est commandé pour, dans le premier mode de détection tactile, établir une première liaison électrique reliant une électrode du premier ensemble d'électrodes (E1, E1') à au moins une autre électrode de l'élément de détection tactile (1).

6. Elément de détection tactile selon la revendication 4 ou la revendication 5, dans lequel le second ensemble d'électrodes comprend au moins deux électrodes (E2, E2'), et dans lequel le contrôleur d'électrodes (4) est commandé pour, dans le second mode de détection tactile, établir une seconde liaison électrique reliant entre elles lesdites électrodes du second ensemble d'électrodes (E2, E2').

7. Elément de détection tactile selon l'une quelconque des revendications 4 à 6, dans lequel le contrôleur d'électrodes (4) est en outre commandé pour, dans un troisième mode de détection tactile, détecter un contact d'un élément extérieur (10) avec la surface de détection (2) au niveau de deux électrodes de l'élément de détection tactile (1) par la modification lors de ce contact d'une impédance entre ces deux électrodes.

8. Elément de détection tactile selon la revendication 7, comprenant au moins trois électrodes, et dans lequel le contrôleur d'électrodes (4) est commandé pour, dans le troisième mode de détection tactile, établir au moins une liaison électrique entre deux électrodes.

9. Procédé de détection tactile utilisant un élément de détection tactile (1) comportant une surface de détection (2), une partie conductrice (3), un premier (D1) et un second (D2) ensembles de détecteurs disposés au niveau de la surface de détection (2), un premier (E1, E1') et un second (E2, E2') ensembles d'électrodes, chaque ensemble d'électrodes comprenant au moins une électrode s'étendant parallèlement à la surface de détection (2), toutes les électrodes étant par elles-mêmes isolées électriquement deux à deux, les premier et second ensembles d'électrodes formant une capacité respective chacun avec ladite partie conductrice (3) de l'élément de détection tactile (1) , chaque détecteur du premier ensemble de détecteurs (D1) étant agencé de façon à détecter un signal (S) émis par au moins une électrode du premier ensemble d'électrodes (E1) et transmis depuis l'une des électrodes émettrices à travers un élément extérieur (10) venant en contact avec la surface de détection (2) au niveau de ce détecteur et au niveau de cette électrode, chaque détecteur du second ensemble de détecteurs (D2) étant agencé de façon à détecter un signal (S) émis par au moins une électrode du second ensemble d'électrodes (E2) et transmis depuis l'une des électrodes émettrices à travers un élément extérieur (10) venant en contact avec la surface de détection (2) au niveau de ce détecteur et au niveau de cette électrode, suivant lequel, la capacité entre le second ensemble d'électrodes (E2) et ladite partie conductrice (3) étant inférieure à la capacité entre le premier ensemble d'électrodes (E1) et ladite partie conductrice (3), le procédé de détection tactile comprend un premier mode de détection tactile dans lequel des détecteurs du premier ensemble de détecteurs (D1) détectent un signal (S) émis par au moins une électrode et transmis par l'élément extérieur (10) lors d'un contact de cet élément avec la surface de détection (2), et au moins un second mode de détection tactile dans lequel des détecteurs du second ensemble de détecteurs (D2) détectent un signal (S) émis par au moins une électrode du second ensemble d'électrodes (E2) et transmis par l'élément extérieur (10) lors d'un contact de cet élément avec la surface de détection (2).

10. Procédé de détection tactile suivant la revendication 9, suivant lequel le premier mode de détection tactile comprend l'établissement d'une première liaison électrique reliant une électrode du premier ensemble d'électrodes (E1, E1') à au moins une autre électrode de l'élément de détection tactile (1).

11. Procédé de détection tactile suivant la revendication 9 ou la revendication 10, suivant lequel, le second ensemble d'électrodes comprenant au moins deux électrodes (E2, E2'), le second mode de détection tactile comprend l'établissement d'une seconde liaison électrique reliant entre elles les électrodes (E2, E2') du second ensemble d'électrodes.

12. Procédé de détection tactile selon l'une quelconque des revendications 9 à 11, comprenant en outre un troisième mode de détection tactile dans lequel un contact d'un élément extérieur (10) avec la surface de détection (2) au niveau de deux électrodes de l'élément de détection tactile (1) est détecté par la modification d'une impédance entre ces deux électrodes.

13. Procédé de détection tactile selon la revendication 12, suivant lequel l'élément de détection tactile (1) comprend au moins trois électrodes, et suivant lequel le troisième mode de détection tactile comprend l'établissement d'au moins une liaison électrique entre deux électrodes.

14. Appareil électronique incorporant un élément de détection tactile (1) selon l'une quelconque des revendications 1 à 8.

## Patentansprüche

1. Berührungsdetektionsbestandteil (1) mit einer Detektionsfläche (2), einem leitenden Teil (3), einer ersten (D1) und einer zweiten (D2) Detektoreneinheit, die auf der Ebene der Detektionsfläche (2) angeordnet sind, einer ersten (E1, E1') und einer zweiten (E2, E2') Elektrodeneinheit, wobei jede Elektrodeneinheit mindestens eine Elektrode umfasst, die sich parallel zu der Detektionsfläche (2) erstreckt, wobei alle Elektroden selbst elektrisch in Paaren isoliert sind, wobei die erste und die zweite Elektrodeneinheit jeweils eine Kapazität mit dem leitenden Teil (3) des Berührungsdetektionsbestandteils (1) bilden, wobei jeder Detektor der ersten Detektoreneinheit (D1) derart angeordnet ist, dass er ein Signal (S) erfasst, das von mindestens einer Elektrode der ersten Elektrodeneinheit (E1) gesendet und über eine der Sendeelektroden durch ein äußeres Element (10), das mit der Detektionsfläche (2) auf der Ebene dieses Detektors und auf der Ebene dieser Elektrode in Kontakt kommt, übertragen wird, wobei jeder Detektor der zweiten Detektoreneinheit (D2) derart eingerichtet ist, dass er ein Signal (S) erfasst, das von mindestens einer Elektrode der zweiten Elektrodeneinheit (E2) gesendet und über eine der Sendeelektroden durch ein äußeres Element (10) übertragen wird, das mit der Detektionsfläche (2) auf der Ebene dieses Detektors und auf der Ebene dieser Elektrode in Berührung kommt, bei dem die Kapazität zwischen der zweiten Elektrodeneinheit (E2) und dem leitenden Teil (3) geringer ist als die Kapazität zwischen der ersten Elektrodeneinheit (E1) und dem leitenden Teil (3).

2. Berührungsdetektionsbestandteil nach Anspruch 1, **dadurch gekennzeichnet, dass** der Abschnitt der Detektionsfläche (2), der von der zweiten Elektrodeneinheit (E2) belegt wird, kleiner ist als der Abschnitt der Detektionsfläche (2), der von der ersten Elektrodeneinheit (E1) belegt wird.

3. Berührungsdetektionsbestandteil nach Anspruch 1 oder Anspruch 2, der einen oder mehrere Detektoren umfasst, die gleichzeitig zu der ersten Detektoreneinheit (D1) und zu der zweiten Detektoreneinheit (D2) gehören.

4. Berührungsdetektionsbestandteil nach einem der vorhergehenden Ansprüche, der einen Elektrodencontroller (4) umfasst, der derart gesteuert ist, dass bei einem ersten Berührungsdetektionsmodus ein Signal (S) von mindestens einer Elektrode durch ein äußeres Element (10), das mit der Detektionsfläche (2) und mit mindestens einem Detektor der ersten Detektoreneinheit (D1) in Berührung kommt, übertragen wird, und derart gesteuert, dass bei mindestens einem zweiten Berührungsdetektionsmodus ein Signal (S) über mindestens eine Elektrode der zweiten Elektrodengruppe (E2) durch ein äußeres Element (10), das mit der Detektionsfläche (2) mit mindestens einem Detektor der zweiten Detektoreneinheit (D2) in Berührung kommt, übertragen wird.

5. Berührungsdetektionsbestandteil nach Anspruch 4, bei dem der Elektrodencontroller (4) gesteuert ist, um bei dem ersten Berührungsdetektionsmodus eine erste elektrische Verbindung herzustellen, die eine Elektrode der ersten Elektrodeneinheit (E1, E1') mit mindestens einer anderen Elektrode des Berührungsdetektionsbestandteils (1) verbindet.

6. Berührungsdetektionsbestandteil nach Anspruch 4 oder Anspruch 5, bei dem die zweite Elektrodeneinheit mindestens zwei Elektroden (E2, E2') umfasst, und bei dem der Elektrodencontroller (4) gesteuert ist, um bei dem zweiten Berührungsdetektionsmodus eine zweite elektrische Verbindung herzustellen, die die Elektroden der zweiten Elektrodeneinheit (E2, E2') untereinander verbindet.

7. Berührungsdetektionsbestandteil nach einem der Ansprüche 4 bis 6, bei dem der Elektrodencontroller (4) ferner gesteuert wird, um bei einem dritten Berührungsdetektionsmodus einen Kontakt eines äußeren Elements (10) mit der Detektionsfläche (2) auf der Ebene von zwei Elektroden des Berührungsdetektionsbestandteils (1) durch die Änderung einer Impedanz zwischen diesen zwei Elektroden bei dieser Berührung zu erfassen.

8. Berührungsdetektionsbestandteil nach Anspruch 7, der mindestens drei Elektroden umfasst, und bei dem der Elektrodencontroller (4) gesteuert wird, um bei dem dritten Berührungsdetektionsmodus mindestens eine elektrische Verbindung zwischen zwei Elektroden herzustellen.

9. Berührungsdetektionsverfahren, das einen Berührungsdetektionsbestandteil (1) mit einer Detektionsfläche (2), einem leitenden Teil (3), einer ersten (D1) und einer zweiten (D2) Detektoreneinheit, die auf der Ebene der Detektionsfläche (2) angeordnet sind, eine erste (E1, E1') und eine zweite (E2, E2') Elektrodeneinheit umfasst, wobei jede Elektrodeneinheit mindestens eine Elektrode umfasst, die sich parallel zu der Detektionsfläche (2) erstreckt, wobei alle Elektroden selbst elektrisch in Paaren isoliert sind, wobei die erste und die zweite Elektrodeneinheit eine Kapazität jeweils mit dem leitenden Teil (3) des Berührungsdetektionsbestandteils (1) bilden, wobei jeder Detektor der ersten Detektoreneinheit (D1) derart angeordnet ist, dass er ein Signal (S), das von mindestens einer Elektrode der ersten Elektrodeneinheit (E1) gesendet und über eine der Sendeelektroden durch ein äußeres Element (10), das mit der Detektionsfläche (2) auf der Ebene dieses Detektors und auf der Ebene dieser Elektrode in Berührung kommt, übertragen wird, erfasst, wobei jeder Detektor der zweiten Detektoreneinheit (D2) derart angeordnet ist, dass er ein Signal (S), das von mindestens einer Elektrode der zweiten Elektrodeneinheit (E2) gesendet und über eine der Sendeelektroden durch ein äußeres Element (10), das mit der Detektionsfläche (2) auf der Ebene dieses Detektors und auf der Ebene dieser Elektrode übertragen wird, erfasst, gemäß welchem, da die Kapazität zwischen der zweiten Elektrodeneinheit (E2) und dem leitenden Teil (3) geringer ist als die Kapazität zwischen der ersten Elektrodeneinheit (E1) und dem leitenden Teil (3), das Berührungsdetektionsverfahren einen ersten Berührungsdetektionsmodus umfasst, bei dem Detektoren der ersten Detektoreneinheit (D1) ein Signal (S) erfassen, das von mindestens einer Elektrode gesendet und von dem äußeren Element (10) bei einem Kontakt dieses Elements mit der Detektionsfläche (2) übertragen wird, und mindestens einen zweiten Berührungsdetektionsmodus, bei dem Detektoren der zweiten Detektoreneinheit (D2) ein Signal (S) erfassen, das von mindestens einer Elektrode der zweiten Elektrodeneinheit (E2) gesendet und von dem äußeren Element (10) bei einem Kontakt mit diesem Element mit der Detektionsfläche (2) übertragen wird.

10. Berührungsdetektionsverfahren nach Anspruch 9, gemäß welchem der erste Berührungsdetektionsmodus das Erstellen einer ersten elektrischen Verbindung umfasst, die eine Elektrode der ersten Elektrodeneinheit (E1, E1') mit mindestens einer weiteren Elektrode des Berührungsdetektionsbestandteils (1) verbindet.

11. Berührungsdetektionsverfahren nach Anspruch 9 oder Anspruch 10, gemäß welchem die zweite Elektrodeneinheit mindestens zwei Elektroden (E2, E2') umfasst, wobei der zweite Berührungsdetektionsmodus das Erstellen einer zweiten elektrischen Verbindung umfasst, die die Elektroden (E2, E2') der zweiten Elektrodeneinheit untereinander verbindet.

12. Berührungsdetektionsverfahren nach einem der Ansprüche 9 bis 11, das ferner einen dritten Berührungsdetektionsmodus umfasst, bei dem ein Kontakt eines äußeren Elements (10) mit der Detektionsfläche (2) auf der Ebene der zwei Elektroden des Berührungsdetektionsbestandteils (1) durch die Änderung einer Impedanz zwischen diesen zwei Elektroden erfasst wird.

13. Berührungsdetektionsverfahren nach Anspruch 12, gemäß welchem der Berührungsdetektionsbestandteil (1) mindestens drei Elektroden umfasst und gemäß welchem der dritte Berührungsdetektionsmodus das Erstellen mindestens einer elektrischen Verbindung zwischen zwei Elektroden umfasst.

14. Elektronisches Gerät, das einen Berührungsdetektionsbestandteil (1) nach einem der Ansprüche 1 bis 8 umfasst.

## Claims

1. Touch-sensitive detection element (1) comprising a detection surface (2), a conducting part (3), a first (D1) and a second (D2) sets of detectors arranged at the detection surface (2), a first (E1, E1') and a second (E2, E2') sets of electrodes, each set of electrodes comprising at least one electrode extending parallel to the detection surface (2), all the electrodes being in themselves electrically isolated in pairs, the first and second sets of electrodes each forming a respective capacitor with said conducting part (3) of the touch-sensitive detection element (1), each detector of the first set of detectors (D1) being arranged to detect a signal (S) emitted by at least one electrode of the first set of electrodes (E1) and transmitted from one of the emitting electrodes through an external element (10) coming into contact with the detection surface (2) at this detector and at this electrode, each detector of the second set of detectors (D2) being arranged to detect a signal (S) emitted by at least one electrode of the second set of electrodes (E2) and transmitted from one of the emitting electrodes through an external element (10) coming into contact with the detection surface (2) at this detector and at this electrode, wherein the capacitor between the second set of electrodes (E2) and said conducting part (3) has a lower capacitance than the capacitor between the first set of electrodes (E1) and said conducting part (3).

2. Touch-sensitive detection element according to Claim 1, **characterized in that** the portion of the detection surface (2) occupied by the second set of electrodes (E2) is smaller than the portion of the detection surface (2) occupied by the first set of electrodes (E1).

3. Touch-sensitive detection element according to Claim 1 or Claim 2, comprising one or more detectors belonging both to the first (D1) and to the second (D2) sets of detectors.

4. Touch-sensitive detection element according to any one of the preceding claims, comprising an electrode controller (4) operated in such a way that, in a first touch-sensitive detection mode, a signal (S) is transmitted from at least one electrode through an external element (10) coming into contact with the detection surface (2) to at least one detector of the first set of detectors (D1), and operated in such a way that, in at least one second touch-sensitive detection mode, a signal (S) is transmitted from at least one electrode of the second group of electrodes (E2) through an external element (10) coming into contact with the detection surface (2) to at least one detector of the second set of detectors (D2).

5. Touch-sensitive detection element according to Claim 4, wherein the electrode controller (4) is operated in such a way as, in the first touch-sensitive detection mode, to establish a first electrical connection connecting an electrode of the first set of electrodes (E1, E1') to at least one other electrode of the touch-sensitive detection element (1).

6. Touch-sensitive detection element according to Claim 4 or Claim 5, wherein the second set of electrodes comprises at least two electrodes (E2, E2'), and wherein the electrode controller (4) is operated in such a way as, in the second touch-sensitive detection mode, to establish a second electrical connection connecting said electrodes of the second set of electrodes (E2, E2') together.

7. Touch-sensitive detection element according to any one of Claims 4 to 6, wherein the electrode controller (4) is also operated in such a way as, in a third touch-sensitive detection mode, to detect a contact of an external element (10) with the detection surface (2) at two electrodes of the touch-sensitive detection element (1) by the change, upon this contact, in an impedance between these two electrodes.

8. Touch-sensitive detection element according to Claim 7, comprising at least three electrodes, and wherein the electrode controller (4) is operated in such a way as, in the third touch-sensitive detection mode, to establish at least one electrical connection between two electrodes.

9. Touch-sensitive detection method employing a touch-sensitive detection element (1) comprising a detection surface (2), a conducting part (3), a first (D1) and a second (D2) sets of detectors arranged at the detection surface (2), a first (E1, E1') and a second (E2, E2') sets of electrodes, each set of electrodes comprising at least one electrode extending parallel to the detection surface (2), all the electrodes being in themselves electrically isolated in pairs, the first and second sets of electrodes each forming a respective capacitor with said conducting part (3) of the touch-sensitive detection element (1), each detector of the first set of detectors (D1) being arranged to detect a signal (S) emitted by at least one electrode of the first set of electrodes (E1) and transmitted from one of the emitting electrodes through an external element (10) coming into contact with the detection surface (2) at this detector and at this electrode, each detector of the second set of detectors (D2) being arranged to detect a signal (S) emitted by at least one electrode of the second set of electrodes (E2) and transmitted from one of the emitting electrodes through an external element (10) coming into contact with the detection surface (2) at this detector and at this electrode, wherein, with the capacitor between the second set of electrodes (E2) and said conducting part (3) having a lower capacitance than the capacitor between the first set of electrodes (E1) and said conducting part (3), the touch-sensitive detection method comprises a first touch-sensitive detection mode in which detectors of the first set of detectors (D1) detect a signal (S) emitted by at least one electrode and transmitted through the external element (10) upon contact of this element with the detection surface (2), and at least one second touch-sensitive detection mode in which detectors of the second set of detectors (D2) detect a signal (S) emitted by at least one electrode of the second set of electrodes (E2) and transmitted through the external element (10) upon contact of this element with the detection surface (2).

10. Touch-sensitive detection method according to Claim 9, wherein the first touch-sensitive detection mode comprises establishing a first electrical connection connecting an electrode of the first set of electrodes (E1, E1') to at least one other electrode of the touch-sensitive detection element (1).

11. Touch-sensitive detection method according to Claim 9 or Claim 10, wherein, with the second set of electrodes comprising at least two electrodes (E2, E2'), the second touch-sensitive detection mode comprises establishing a second electrical connection connecting the electrodes (E2, E2') of the second set of electrodes together.

12. Touch-sensitive detection method according to any one of Claims 9 to 11, further comprising a third touch-sensitive detection mode in which a contact of an external element (10) with the detection surface (2) at two electrodes of the touch-sensitive detection element (1) is detected by the change in an impedance between these two electrodes.

13. Touch-sensitive detection method according to Claim 12, wherein the touch-sensitive detection element (1) comprises at least three electrodes, and wherein the third touch-sensitive detection mode comprises establishing at least one electrical connection between two electrodes.

14. Electronic apparatus incorporating a touch-sensitive detection element (1) according to any one of claims 1 to 8.
